# EUROPEAN PATENT APPLICATION

(11) **EP 4 834 962 A1**
(43) Date of publication of application: **04.11.2026**
(21) Application number: 24913397.6
(22) Date of filing: 26.12.2024
(51) Int. Cl.: C08F 220/18, C08F 218/08, C08F 8/12, H01M 4/62, H01M 4/13, H01M 4/139, H01M 10/052, H01M 4/02

(54) **BINDER COMPRISING COPOLYMER, SECONDARY BATTERY ANODE COMPRISING BINDER, AND SECONDARY BATTERY COMPRISING ANODE**

(30) Priority: 26.12.2023 KR 20230191508
(71) Applicant: Hansol Chemical Co., Ltd, Seoul 06169 (KR)
(72) Inventor: KIM, Chang-Beom, Iksan-si, Jeonbuk-do 54524 (KR); PARK, Ji-Hye, Iksan-si, Jeonbuk-do 54524 (KR); PARK, Chan-Su, Iksan-si, Jeonbuk-do 54524 (KR); GWON, Hyeon-Ji, Iksan-si, Jeonbuk-do 54524 (KR); LEE, Eun-Song, Iksan-si, Jeonbuk-do 54524 (KR); CHOI, Ji-Hyun, Iksan-si, Jeonbuk-do 54524 (KR); KWON, Se-Man, Iksan-si, Jeonbuk-do 54524 (KR)
(74) Representative: Ipsilon
(86) International application number: PCT/KR2024/021117
(87) International publication number: WO 2025/143790

(57) **Abstract**

The present invention relates to a copolymer, an anode slurry comprising same, an anode and a secondary battery, the copolymer comprising, on the basis of 100 mol% of the total weight of the copolymer, 65-99 mol% of an acrylic acid-based monomer unit or a combination of an acrylate-based monomer unit and an acrylic acid-based monomer unit and 1-35 mol% of a vinyl alcohol-based monomer unit or a combination of a vinyl acetate-based monomer unit and a vinyl alcohol-based monomer unit, and having a number average molecular weight of 150,000-230,000.

## Description

### Technical Field

The present disclosure relates to a copolymer that is capable of being used as a binder, and a slurry, an electrode, and a secondary battery including the copolymer.

### Background Art

Lithium secondary batteries have high energy density and are widely used in the electric, electronic, communication, and computer industries, and fields of application thereof are expanding from small lithium secondary batteries for portable electronic devices to high-capacity secondary batteries for hybrid vehicles, electric vehicles, and so on.

According to the expansion of the fields of application, long-life characteristics are also required together with higher capacity of lithium secondary batteries. As an example of a method for increasing capacity of a lithium secondary battery, an active material containing silicon atoms may be used in an anode.

When an active material containing silicon atoms, which has a larger amount of lithium insertion/deinsertion than a conventional carbon-based active material, is applied, improvement in battery capacity may be expected. However, since a silicon-containing active material has a large volume change accompanying lithium insertion/deinsertion, an anode active material layer largely expands and contracts during charging and discharging.

As a result, there have been problems in that conductivity between anode active materials is reduced, or a conductive path between an anode active material and a current collector is blocked, and cycle characteristics of a secondary battery deteriorate.

In addition, an anode slurry including silicon and carbon nanotubes may cause an overload on mixing equipment during slurry preparation due to high slurry viscosity, may require excessive time for a slurry filtering operation, or may cause problems in transfer and coating processes.

Therefore, development of an anode binder which is capable of reducing viscosity of an anode slurry including silicon and carbon nanotubes, which has excellent binding force and dispersibility, and which is capable of suppressing electrode expansion is required.

### [Document of Related Art]

### [Patent Document]

(Patent Document 1) Korean Patent Application Publication No. 10-2013-0117901

### Disclosure

### Technical Problem

Accordingly, an objective of the present disclosure is to provide a copolymer for an anode binder which is capable of reducing viscosity of a slurry (for example, an anode slurry including a silicon anode active material, carbon nanotubes, or a combination thereof), which has excellent binding force and dispersibility, and which is capable of suppressing electrode expansion.

In addition, the present disclosure is intended to provide an electrode (particularly, an anode) having excellent performance to which the slurry composition is applied, and is intended to provide a secondary battery including the electrode and having excellent life characteristics (a capacity retention rate).

However, technical problems to be solved by the present disclosure are not limited to the technical problems described above, and other technical problems not mentioned above will be clearly understood by a person skilled in the art from the following description.

However, technical problems to be solved by the present disclosure are not limited to the technical problems described above, and other technical problems not mentioned above will be clearly understood by a person skilled in the art from the following description.

### Technical Solution

According to an aspect of the present disclosure, there is provided a copolymer including, on the basis of 100 mol% of the total weight of the copolymer:
65 mol% or more and 99 mol% or less of an acrylic acid-based monomer unit, or a combination of an acrylate-based monomer unit and the acrylic acid-based monomer unit; and
1 mol% or more and 35 mol% or less of a vinyl alcohol-based monomer unit, or a combination of a vinyl acetate-based monomer unit and the vinyl alcohol-based monomer unit,
wherein the copolymer has a number average molecular weight of 150,000 or more and 230,000 or less.

According to another aspect of the present disclosure, there is provided an anode slurry including:
the copolymer; and
an anode active material.

According to still another aspect of the present disclosure, there is provided an anode including:
a current collector; and
an anode active material layer including the copolymer, the anode active material layer being formed on the current collector.

According to yet another aspect of the present disclosure,
there is provided a secondary battery including the anode.

### Advantageous Effects

The copolymer of the present disclosure may reduce viscosity of an anode slurry including a silicon anode active material, carbon nanotubes, or a combination thereof, and may increase binding force, dispersibility, and electrode expansion suppression ability, thereby being capable of increasing life characteristics (a capacity retention rate) of a lithium secondary battery.

### Description of Drawings

FIG. 1 is a graph showing results of measuring rheological properties of anode slurries prepared in Examples 1 and 2 and Comparative Examples 1 to 4 that were measured according to Evaluation Example 3 of the present disclosure.
FIG. 2 shows SEM images captured to evaluate dispersibility of copolymers for anode binders prepared in Examples 1 and 2 and Comparative Examples 1 to 4 that were measured according to Evaluation Example 5 of the present disclosure.

### Best Mode

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Before discussing the details, it should be noted that all terms or words used herein and used in the appended claims are not construed as being limited to general and dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present disclosure.

As used herein, the singular forms are intended to include the plural forms, unless the context clearly indicates otherwise. It will be further understood that the terms "comprise," "include," "contain," "have," and so on when used herein, are intended to specify the presence of stated features, integers, steps, constituent elements, or combinations thereof but do not preclude the possibility of the presence or addition of one or more other features, integers, steps, constituent elements, or combinations thereof.

In the present specification, in expressions indicating a numerical range such as "a to b" and "a ~ b", "to" and "~" are defined as equal to or larger than a (≥ a) and equal to or less than b (≤ b).

A copolymer according to an aspect of the present disclosure may include, on the basis of 100 mol% of the total weight of the copolymer: 65 mol% or more and 99 mol% or less of an acrylic acid-based monomer unit, or a combination of an acrylate-based monomer unit and the acrylic acid-based monomer unit; and 1 mol% or more and 35 mol% or less of a vinyl alcohol-based monomer unit, or a combination of a vinyl acetate-based monomer unit and the vinyl alcohol-based monomer unit.

In addition, the copolymer may have a number average molecular weight of 150,000 or more and 230,000 or less.

For example, the copolymer may include, on the basis of 100 mol% of the total weight of the copolymer, 0 mol% or more and 5 mol% or less of the acrylate-based monomer unit and/or 0 mol% or more and 5 mol% or less of the vinyl acetate-based monomer unit.

When the number average molecular weight exceeds the range of the present disclosure, viscosity of a copolymer for a binder and a slurry including the copolymer for the binder may increase, and electrode coating properties and processability may be significantly deteriorated. Furthermore, when the number average molecular weight is less than the range of the present disclosure, binding force of the copolymer for the binder may be significantly deteriorated, and a detachment phenomenon of an active material or the like from an electrode may occur, so that electrode fabrication may become difficult, an electrode expansion rate may increase, and performance of a battery may be deteriorated.

When the acrylate-based monomer unit exceeds or is less than the content range of the present disclosure, deterioration in binding force may occur.

When the acrylic acid-based monomer unit exceeds or is less than the content range of the present disclosure, polymer aggregation and precipitation or deterioration in adhesive force may occur.

When the vinyl acetate monomer unit exceeds or is less than the content range of the present disclosure, a stability problem such as storage stability may occur.

When the vinyl alcohol-based monomer unit exceeds or is less than the content range of the present disclosure, deterioration in adhesive force, an increase in viscosity, an increase in particle size, and so on may occur.

In an embodiment, the copolymer may be prepared by copolymerizing an acrylate-based monomer and a vinyl acetate-based monomer and hydrolyzing the copolymerized product.

The hydrolysis may be alkaline hydrolysis.

In an embodiment, the copolymer may be prepared by copolymerizing 65 mol% or more and 99 mol% or less of the acrylate-based monomer and 1 mol% or more and 35 mol% or less of the vinyl acetate-based monomer and hydrolyzing the copolymerized product.

Meanwhile, the acrylate-based monomer and the vinyl acetate-based monomer may be respectively copolymerized to respectively form the acrylate-based monomer unit and the vinyl acetate-based monomer unit.

In an embodiment, the acrylate-based monomer unit may be formed by polymerizing methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, stearyl methacrylate, or a combination thereof.

In addition, the vinyl acetate-based monomer unit may be formed by polymerizing vinyl acetate.

Meanwhile, a portion of the vinyl acetate-based monomer unit may be changed into a vinyl alcohol-based monomer unit by the hydrolysis.

In addition, a portion of the acrylate-based monomer unit may be changed into an acrylic acid-based monomer unit by the hydrolysis.

A degree of the hydrolysis may be adjusted to, for example, 70% or more, 75% or more, 80% or more, 85% or more, 90% or more, or 95% or more.

This means that, for example, 70 mol% or more, 75 mol% or more, 80 mol% or more, 85 mol% or more, 90 mol% or more, or 95 mol% or more of all vinyl acetate-based monomer units of the copolymer may be changed into the vinyl alcohol-based monomer units.

In addition, this means that, for example, 70 mol% or more, 75 mol% or more, 80 mol% or more, 85 mol% or more, 90 mol% or more, or 95 mol% or more of all acrylate-based monomer units of the copolymer may be changed into the acrylic acid-based monomer units.

In an embodiment, the acrylic acid-based monomer unit may be bonded to an alkali metal.

That is, a carboxylate group of the acrylic acid-based monomer unit may be bonded to an alkali metal.

Meanwhile, a weight ratio between the alkali metal and the copolymer (a weight of the alkali metal: a weight of the copolymer) may be 0.8:100 to 6.5:100.

When the weight ratio between the alkali metal and the copolymer exceeds or is less than the weight ratio of the present disclosure, binding characteristics of the binder may be deteriorated.

The binding force of the binder including the alkali metal may be determined according to the strengths of cohesive force, repulsive force, and so on between elements, and the adhesive force of the binder may change according to a change in content due to a change in the relative dominance among cohesive force, adhesive force, and repulsive force.

The binding force of the binder may increase life characteristics of a secondary battery.

In the copolymer of the present disclosure, wettability of the copolymer may be increased by bonding to an alkali metal and generation of an alcohol functional group, and an anchor effect may be induced, thereby maximizing adhesive force.

In an embodiment, the copolymer may include a monomer repeating unit represented by Chemical Formula 1 below.

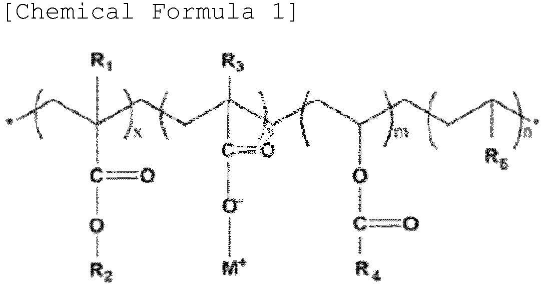

In Chemical Formula 1,
R₁ and R₃ are each independently hydrogen, a linear or branched hydrocarbon having 1 to 4 carbon atoms, or a combination thereof, R₂ and R₄ are each independently a linear or branched hydrocarbon having 1 to 3 carbon atoms, R₅ is - OH, M is an alkali metal, 0.65≤x+y≤0.99, 0.01≤m+n≤0.35, and x+y+m+n may be 1.

However, x may be 0 or may exceed 0, and m may be 0 or may exceed 0.

x, y, m, and n in Chemical Formula 1 correspond to molar fractions of respective monomer units, and a sum of the molar fractions of the respective monomer units is 1.

In an embodiment, R₁ and R₃ in Chemical Formula 1 may each independently be hydrogen, methyl, ethyl, or a combination thereof, and R₂ and R₄ in Chemical Formula 1 may each independently be methyl, ethyl, or a combination thereof.

Meanwhile, M in Chemical Formula 1 may be Li, Na, or K, but is not limited thereto.

In an embodiment, the copolymer may be a random copolymer or a block copolymer according to a synthesis process.

In an embodiment, a pH of the copolymer may be 9 or more and 11 or less.

When the pH of the copolymer is less than the range of the present disclosure, binding force of the copolymer for a binder may be reduced, an electrode expansion rate may increase, and performance of a battery may be deteriorated.

In addition, when the pH of the copolymer exceeds the range of the present disclosure, dispersibility of a slurry may be reduced.

In an embodiment, a viscosity of the copolymer may be 1,100 cP or more and 2,000 cP or less.

For example, the viscosity of the copolymer may be 1,150 cP or more and 1,700 cP or less, or 1,200 cP or more and 1,650 cP or less.

When the viscosity of the copolymer is less than the range of the present disclosure, binding force may be reduced, an electrode expansion rate may increase, and performance of a battery may be deteriorated.

In addition, when the viscosity of the copolymer exceeds the range of the present disclosure, viscosity of a slurry including the copolymer for a binder may increase, and electrode coating properties and processability may be significantly deteriorated.

An anode slurry according to another aspect of the present disclosure may include the copolymer and an anode active material.

That is, the copolymer may be used as a binder for an anode, and may particularly be an aqueous binder.

In an embodiment, the anode slurry may have a viscosity of 2,000 cP or more and 6,000 cP or less at a shear rate of 10 s⁻¹.

When the viscosity of the anode slurry is less than the range of the present disclosure, controlling a loading amount of a mixture layer may be difficult to be performed during coating of the anode slurry.

In addition, when the viscosity of the anode slurry exceeds the range of the present application, bubbles generated in the anode slurry may be difficult to be removed, excessive load may be applied to mixing equipment due to high viscosity during preparation of the anode slurry, and transfer of the anode slurry may be difficult to be performed.

The anode active material may be a compound including at least one selected from the group consisting of a carbon-based material, silicon, an alkali metal, an alkaline earth metal, a Group 13 element, a Group 14 element, a transition metal, and a rare earth element, and may preferably be silicon or a compound including silicon.

Examples of the carbon-based material may include artificial graphite, natural graphite, hard carbon, soft carbon, and so on, but the carbon-based material is not limited thereto. A type of the anode active material including silicon is not particularly limited as long as the anode active material including silicon is silicon or a compound including silicon, but the anode active material including silicon may preferably be at least one selected from the group consisting of Si, SiOₓ (where 0<x<2), a Si-Y alloy (where Y is an alkali metal, an alkaline earth metal, a Group 13 element, a Group 14 element, a transition metal, a rare earth element, or a combination thereof, and is not Si), and a Si-C composite.

In addition, when an anode active material including silicon and another anode active material are mixed and used as the anode active material, the anode active material including silicon may be included in an amount of 8 wt% or more of the total weight of the anode active material.

The anode active material may be included in an amount of 50 wt% to 99 wt%, preferably 60 wt% to 80 wt%, with respect to the total weight of the anode active material layer.

When the anode active material is included in an amount of less than 50 wt%, energy density decreases, so that a battery having high energy density cannot be manufactured. Furthermore, when the anode active material is included in an amount exceeding 99 wt%, contents of a conductive material and a binder decrease, so that electrical conductivity may decrease, and adhesive force between the electrode active material layer and the current collector may decrease.

Meanwhile, the copolymer of the present disclosure may be included in an amount of 2 wt% or more and 5 wt% or less with respect to solid content of the anode slurry. When the copolymer is included in an amount of less than 2 wt%, physical properties of the anode may be deteriorated, and detachment of the anode active material and the conductive material may occur. Furthermore, when the copolymer is included in an amount exceeding 5 wt%, a ratio of the anode active material and the conductive material relatively decreases, so that battery capacity may decrease, and electrical conductivity of the anode may be deteriorated.

In addition, the anode slurry may further include a polymer in addition to the copolymer composition of the present disclosure. Specific examples of the polymer may include polyvinylidene fluoride (PVDF), polyvinyl alcohol (PVA), polyacrylic acid (PAA), polyacrylic acid metal salt (Metal-PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, hydroxypropyl cellulose, regenerated cellulose, various copolymers thereof, and so on, but the polymer is not limited thereto.

An anode according to still another aspect of the present disclosure may include a current collector and an anode active material layer including the copolymer of the present disclosure, the anode active material layer being formed on the current collector.

Binding force of the anode of the present disclosure may be 7.0 gf/cm to 8.0 gf/cm.

The anode active material layer may further include a conductive material. The conductive material is used to further increase conductivity of the anode active material. The conductive material is not particularly limited as long as the conductive material has conductivity without causing a chemical change in a corresponding battery, and examples of the conductive material may include: graphite such as natural graphite or artificial graphite; carbon black such as acetylene black, Ketjen black, channel black, furnace black, lamp black, and thermal black; conductive fibers such as carbon fibers or metal fibers; carbon fluoride; metal powders such as aluminum powder and nickel powder; conductive whiskers such as zinc oxide and potassium titanate; conductive metal oxides such as titanium oxide; polyphenylene derivatives; and so on.

The conductive material may be included in an amount of 0.5 wt% to 30 wt%, preferably 15 wt% to 25 wt%, with respect to the total weight of the anode active material layer. When the conductive material is included in an amount of less than 0.5 wt%, electrical conductivity of the anode decreases. When the conductive material is included in an amount exceeding 30 wt%, a ratio of a silicon-based anode active material and the binder relatively decreases, so that battery capacity decreases. Furthermore, since a content of the binder is required to be increased in order to maintain the anode active material layer, a content of the anode active material decreases, so that a battery having high energy density cannot be manufactured.

In the anode of the present disclosure, since the anode active material layer includes the copolymer of the present disclosure, volume expansion of the anode active material generated during charging and discharging of the secondary battery may be suppressed, initial efficiency and a capacity retention rate per cycle may be increased, and electrical resistance may be lowered.

The anode may be manufactured through: (a) preparing a composition for forming an anode active material layer, the composition including an anode active material and the copolymer composition of the present disclosure; and (b) applying the composition for forming the anode active material layer onto an anode current collector and then drying the applied composition.

The composition for forming the anode active material layer is prepared in an anode slurry state, and a solvent for preparing the composition in the slurry state should be easy to dry. Most preferably, the solvent should be capable of sufficiently dissolving the binder of the copolymer composition of the present disclosure while maintaining the anode active material in a dispersed state without dissolving the anode active material.

The solvent according to the present disclosure may be water or an organic solvent, and the organic solvent may be an organic solvent including at least one selected from the group consisting of methylpyrrolidone, dimethylformamide, isopropyl alcohol, acetonitrile, methanol, ethanol, and tetrahydrofuran.

The composition for forming the anode active material layer may be mixed by stirring the composition by a conventional method using a conventional mixer, for example, a paste mixer, a high-speed shear mixer, a homo-mixer, and so on.

The process (b) is a process of manufacturing an anode for a lithium secondary battery by applying the composition for forming the anode active material layer prepared in the process (a) onto the anode current collector and then drying the composition.

Specifically, the anode current collector may be selected from the group consisting of copper, stainless steel, titanium, silver, palladium, nickel, an alloy thereof, and a combination thereof. The stainless steel may be surface-treated with carbon, nickel, titanium, or silver, and an aluminum-cadmium alloy may be used as the alloy. In addition, baked carbon, a non-conductive polymer surface-treated with a conductive material, a conductive polymer, or the like may also be used.

The composition for forming the anode active material layer prepared in the process (a) is applied onto the anode current collector, and the composition may be coated on the current collector to an appropriate thickness according to a thickness to be formed, and the thickness may preferably be appropriately selected within a range of 10 µm to 300 µm.

Here, a method of applying the composition for forming the anode active material layer in the slurry form is not limited, and the anode active material layer may be formed by performing, for example, doctor blade coating, dip coating, gravure coating, slit die coating, spin coating, comma coating, bar coating, reverse roll coating, screen coating, cap coating, or the like.

After application, drying may be performed to finally manufacture an anode for a secondary battery (particularly, a lithium secondary battery) in which the anode active material layer is formed.

A battery according to yet another aspect of the present disclosure may include an anode including a current collector and the anode active material layer formed on the current collector.

An expansion rate of the anode may be 26.5% or less.

The battery may be a secondary battery (particularly, a lithium secondary battery) including a cathode, the anode, a separator interposed between the cathode and the anode, and an electrolyte solution.

In addition, when charging and discharging of the secondary battery are repeated for 200 cycles, a capacity retention rate may be 75% or more.

Configurations of the cathode, the separator, and the electrolyte solution of the lithium secondary battery are not particularly limited in the present disclosure, and may follow configurations known in the art.

The cathode includes a cathode active material formed on a cathode current collector.

The cathode current collector is not particularly limited as long as the cathode current collector has high conductivity without causing a chemical change in a corresponding battery. For example, stainless steel, aluminum, nickel, titanium, baked carbon, or aluminum or stainless steel surface-treated with carbon, nickel, titanium, silver, or the like may be used as the cathode current collector. Here, the cathode current collector may have various forms such as a film, a sheet, foil, a net, a porous body, a foam body, a nonwoven fabric body, or the like having fine unevenness formed on a surface thereof so as to increase adhesive force with the cathode active material.

As the cathode active material forming a cathode active material layer, all cathode active materials available in the art may be used. Specific examples of the cathode active material may include: lithium metal; lithium cobalt-based oxides such as LiCoO₂; lithium manganese-based oxides such as Li₁₊ₓMn₂₋ₓO₄ (where x is 0 to 0.33), LiMnO₃, LiMn₂O₃, LiMnO₂; lithium copper oxides such as Li₂CuO₂; vanadium oxides such as LiV₃O₈, LiFe₃O₄, V₂O₅, Cu₂V₂O₇; lithium nickel-based oxides represented by LiNi₁₋ₓMₓO₂ (where M is Co, Mn, Al, Cu, Fe, Mg, B, or Ga, and x is 0.01 to 0.3); lithium manganese composite oxides represented by LiMn₂₋ₓMₓO₂ (where M is Co, Ni, Fe, Cr, Zn, or Ta, and x is 0.01 to 0.1), or Li₂Mn₃MO₈ (where M is Fe, Co, Ni, Cu, or Zn); lithium-nickel-manganese-cobalt-based oxides represented by Li(NiₐCo_{b}Mn_{c})O₂ (where 0<a<1, 0<b<1, 0<c<1, and a+b+c=1); sulfur or a disulfide compound; phosphates such as LiFePO₄, LiMnPO₄, LiCoPO₄, LiNiPO₄; Fe₂(MoO₄)₃; and so on, but the cathode active material is not limited thereto.

Here, the cathode active material layer may further include a binder, a conductive material, a filler, other additives, and so on in addition to the cathode active material, and the conductive material is the same as described above for the anode for the lithium secondary battery.

In addition, examples of the binder may include polyvinylidene fluoride (PVDF), polyvinyl alcohol (PVA), polyacrylic acid (PAA), polymethacrylic acid (PMA), polymethyl methacrylate (PMMA), polyacrylamide (PAM), polymethacrylamide, polyacrylonitrile (PAN), polymethacrylonitrile, polyimide (PI), chitosan, starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber (SBR), fluorine rubber, various copolymers thereof, and so on, but the binder is not limited thereto.

The separator may include a porous substrate. Furthermore, as the porous substrate, any porous substrate that is generally used in an electrochemical device may be used. For example, a polyolefin-based porous membrane or a nonwoven fabric may be used as the porous substrate, but the porous substrate is not particularly limited thereto.

The separator may be a porous substrate including any one selected from the group consisting of polyethylene, polypropylene, polybutylene, polypentene, polyethylene terephthalate, polybutylene terephthalate, polyester, polyacetal, polyamide, polycarbonate, polyimide, polyether ether ketone, polyether sulfone, polyphenylene oxide, polyphenylene sulfide, and polyethylene naphthalate, or a mixture of two or more thereof.

The electrolyte solution of the lithium secondary battery is a non-aqueous electrolyte solution containing a lithium salt, and includes a lithium salt and a solvent. As the solvent, a non-aqueous organic solvent, an organic solid electrolyte, an inorganic solid electrolyte, or the like may be used.

The lithium salt is a material that is easily dissolved in the non-aqueous electrolyte solution and, for example, LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)·2NLi, lithium chloroborane, lithium lower aliphatic carboxylate, lithium 4-phenylborate imide, or the like may be used.

As the non-aqueous organic solvent, for example, an aprotic organic solvent such as N-methyl-2-pyrrolidone, propylene carbonate, ethylene carbonate, butylene carbonate, dimethyl carbonate, diethyl carbonate, ethyl methyl carbonate, gamma-butyrolactone, 1,2-dimethoxyethane, 1,2-diethoxyethane, tetrahydrofuran, 2-methyl tetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, triester phosphate, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, or the like may be used.

As the organic solid electrolyte, for example, a polyethylene derivative, a polyethylene oxide derivative, a polypropylene oxide derivative, a phosphate ester polymer, poly agitation lysine, polyester sulfide, polyvinyl alcohol, polyvinylidene fluoride, a polymer including a secondary dissociation group, or the like may be used.

As the inorganic solid electrolyte, for example, a nitride, a halide, a sulfide, or the like of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, or the like may be used.

In addition, the non-aqueous electrolyte solution may further include other additives for the purpose of increasing charge/discharge characteristics, flame retardancy, and so on. Examples of the additives may include pyridine, triethyl phosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, aluminum trichloride, fluoroethylene carbonate (FEC), propene sultone (PRS), vinylene carbonate (VC), and so on.

The lithium secondary battery according to the present disclosure may be manufactured not only by a winding process that is a general process but also by a lamination stack process and a folding process of the separator and the electrodes. In addition, the battery case may have a cylindrical shape, a prismatic shape, a pouch shape, a coin shape, or the like.

### Mode for Invention

Hereinafter, the present disclosure will be described in more detail using Examples, but the present disclosure is not limited thereto.

### [Preparation Example 1] Preparation of Copolymer

After 1,051 g of distilled water and 10 g of alkyldiphenyl oxide disulfonate were introduced into a reactor, nitrogen was introduced into the reactor, and the mixture was stirred for 1 hour.

Thereafter, after the temperature was increased to a first reaction temperature, 3.01 g of potassium persulfate was introduced into the reactor, 130 g of vinyl acetate and 350 g of ethyl acrylate were dividedly introduced for 2 hours, and the temperature was maintained for 2 hours to acquire a vinyl acetate-ethyl acrylate copolymer having a solid content of 29 wt%.

100 g of the prepared vinyl acetate-ethyl acrylate copolymer having a solid content of 29 wt%, 150 g of ethanol, a hydroxide, and an organic salt were introduced into the reactor, and the mixture was stirred at 60 degrees Celsius for 4 hours to perform hydrolysis.

After completion of the hydrolysis, the precipitated hydrolysate was dissolved in distilled water, heated to 80 degrees Celsius, and stirred and stripped for 8 hours to prepare a copolymer for an anode binder.

### [Preparation Example 2] Preparation of Lithium Secondary Battery

23.7 g of artificial graphite as an electrode active material, 17.7 g of a Si active material, 0.03 g of a single-walled carbon nanotube (SWCNT) based on solid content, and 0.9 g of the anode binder prepared according to Preparation Example 1 based on solid content were mixed with distilled water to prepare an anode slurry.

The prepared anode slurry was uniformly applied onto a copper current collector, dried at 120 degrees Celsius for 10 minutes, and then the resulting electrode was rolled and vacuum-dried in a vacuum oven at 110 degrees Celsius for 4 hours or more to prepare an anode.

Thereafter, a non-aqueous electrolyte solution containing a lithium salt was used as an electrolyte, a polyolefin separator was interposed between a cathode and the anode, and then a lithium secondary battery was manufactured without distinction between a pouch type and a coin cell type.

As the non-aqueous electrolyte solution, a solution in which 5 wt% of FEC and 1 wt% of LiPO₂F₂ were added to a solvent prepared by mixing ethylene carbonate, ethyl methyl carbonate, and diethyl carbonate at a volume ratio of 2:1:7 and LiPF₆ as an electrolyte was dissolved at a concentration of 1.5 M was used.

### [Example 1]

After a copolymer for an anode binder having a pH of 10 and a number average molecular weight of 180,000 was prepared according to Preparation Example 1 by setting the first reaction temperature to 68 degrees Celsius, an anode slurry including 3.5 g of the copolymer for the anode binder based on solid content, an anode, and a lithium secondary battery were prepared according to Preparation Example 2.

### [Example 2]

A copolymer for an anode binder having a number average molecular weight of 180,000 was prepared in the same manner as in Example 1, except that an organic acid was added so that the pH became 8. Then, an anode slurry including the copolymer for the anode binder, an anode, and a lithium secondary battery were prepared according to Preparation Example 2.

As the organic acid, lactic acid, citric acid, acetic acid, malic acid, or a combination thereof may be used.

### [Comparative Example 1]

A copolymer for an anode binder having a pH of 10 and a number average molecular weight of 130,000 was prepared in the same manner as in Example 1, except that the first reaction temperature was set to 75 degrees Celsius. Then, an anode slurry including the copolymer for the anode binder, an anode, and a lithium secondary battery were prepared according to Preparation Example 2.

### [Comparative Example 2]

A copolymer for an anode binder having a pH of 10 and a number average molecular weight of 300,000 was prepared in the same manner as in Example 1, except that the first reaction temperature was set to 60 degrees Celsius. Then, an anode slurry including the copolymer for the anode binder, an anode, and a lithium secondary battery were prepared according to Preparation Example 2.

### [Comparative Example 3]

A copolymer for an anode binder having a pH of 10 and a number average molecular weight of 400,000 was prepared in the same manner as in Example 1, except that the first reaction temperature was set to 55 degrees Celsius. Then, an anode slurry including the copolymer for the anode binder, an anode, and a lithium secondary battery were prepared according to Preparation Example 2.

### [Comparative Example 4]

A copolymer for an anode binder having a number average molecular weight of 180,000 was prepared in the same manner as in Example 1, except that an organic acid was added so that the pH became 7. Then, an anode slurry including the copolymer for the anode binder, an anode, and a lithium secondary battery were prepared according to Preparation Example 2.

Number average molecular weights of the copolymers for the anode binders of Examples 1 and 2 and Comparative Examples 1 to 4 were measured by gel filtration chromatography (GFC) using water as a solvent.

### [Evaluation Example 1] Evaluation of Binding Force of Copolymer for Anode Binder

In order to measure binding force of the anodes prepared in Examples 1 and 2 and Comparative Examples 1 to 4, anode mixture layers prepared in Examples 1 and 2 and Comparative Examples 1 to 4 were attached to an acrylic plate, and then a 180-degree peel test was performed using a UTM to measure binding force.

### [Evaluation Example 2] Evaluation of Viscosity of Copolymer for Anode Binder

Viscosities of the copolymers for the anode binders prepared in Examples 1 and 2 and Comparative Examples 1 to 4 were measured at 25 degrees Celsius using a Brookfield viscometer (63 spindle, 15 rpm).

Each copolymer for the anode binder was introduced into a 50 ml transparent vial to a height of 5 cm from the bottom, and measurement was performed. A value measured after 1 minute was used as viscosity.

### [Evaluation Example 3] Evaluation of Rheological Properties of Anode Slurry

As rheological properties of the anode slurries prepared in Examples 1 and 2 and Comparative Examples 1 to 4, a change in viscosity according to a change in shear rate was measured using 3 g of each anode slurry with a rheometer.

A range of the shear rate was 0.01 s⁻¹ to 1000 s⁻¹, and measurement was performed at 25 degrees Celsius.

### [Evaluation Example 4] Evaluation of Capacity Retention Rate and Anode Expansion Rate of Secondary Battery

Lithium secondary batteries manufactured in Examples 1 and 2 and Comparative Examples 1 to 4 were charged and discharged three times at 25 degrees Celsius by setting a charge cut-off voltage to 4.8 V and a discharge cut-off voltage to 2.7 V, and adjusting charge/discharge current densities of respective charge/discharge cycles to -0.1 C, 0.2 C, and 0.5 C, respectively.

Thereafter, charging and discharging were performed 200 times by setting the charge/discharge current density to 1 C, the charge cut-off voltage to 4.8 V, and the discharge cut-off voltage to 2.7 V, thereby measuring a capacity retention rate.

All charging was performed under constant current/constant voltage conditions, and a cut-off current of discharging at the constant voltage was 0.005 C.

The capacity retention rate and the electrode expansion rate were calculated according to Equations 1 and 2 below, respectively. [Equation 1] 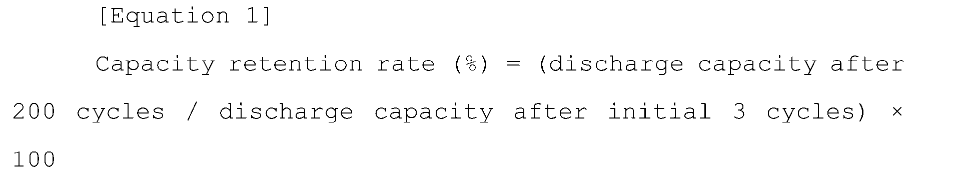 Capacity retention rate (%) = (discharge capacity after 200 cycles / discharge capacity after initial 3 cycles) × 100 [Equation 2] 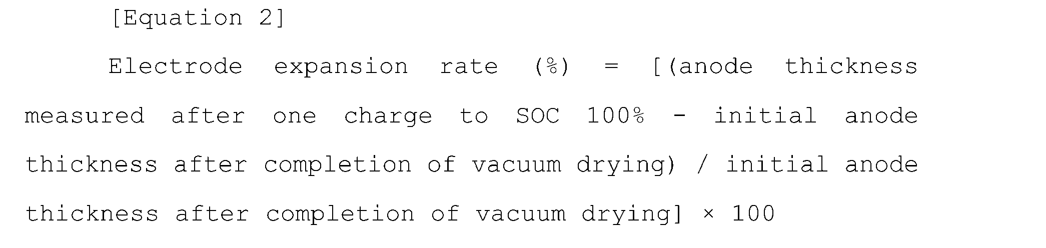 Electrode expansion rate (%) = [(anode thickness measured after one charge to SOC 100% - initial anode thickness after completion of vacuum drying) / initial anode thickness after completion of vacuum drying] × 100

### [Evaluation Example 5] Evaluation of Dispersibility of Copolymer for Anode Binder

The anodes prepared in Examples 1 and 2 and Comparative Examples 1 to 4 were analyzed by SEM to measure dispersibility of the copolymer for the anode binder in each anode.

Measurement values of binding force, viscosity, capacity retention rate, and electrode expansion rate evaluated according to Evaluation Examples 1, 2, and 4 are shown in Table 1 below.

**[Table 1]**

| | Binding force (gf/cm) | Viscosity (cP) | Capacity retention rate after 200 cycles (%) | Electrode expansion rate (%) |
|---|---|---|---|---|
| Example 1 | 7.2 | 1,550 | 78 | 26.2 |
| Example 2 | 7.6 | 1,260 | 78 | 25.7 |
| Comparative Example 1 | 4.6 | 1,040 | 72 | 28.3 |
| Comparative Example 2 | 8.4 | 2,250 | 79 | 27.0 |
| Comparative Example 3 | 9.0 | 3,530 | 76 | 25.9 |
| Comparative Example 4 | 6.3 | 980 | 74 | 27.4 |

As shown in Table 1, the binding force of the copolymers for binders prepared according to Examples 1 and 2 was measured as 7.0 gf/cm to 8.0 gf/cm, and the viscosity thereof was measured as 1,100 cP to 2,000 cP.

In addition, the capacity retention rate of the lithium secondary batteries manufactured according to Examples 1 and 2 was 75% or more, and the electrode expansion rate was measured as 26.5% or less.

Compared with Examples 1 and 2, Comparative Example 1 having a low number average molecular weight had low viscosity of the copolymer for the binder, but binding force was reduced and detachment occurred, and thus electrode fabrication was difficult and capacity retention rate characteristics of the battery were deteriorated.

In addition, compared with Examples 1 and 2, Comparative Examples 2 and 3 having high number average molecular weights had high binding force of the copolymers for the binders, but the viscosity of the copolymers for the binders was excessively high, so that electrode coating was difficult and processability was significantly deteriorated.

Meanwhile, compared with Examples 1 and 2, Comparative Example 4 having a low pH had low viscosity of the copolymer for the binder, but binding force and capacity retention rate were reduced. However, the electrode expansion rate increased, so that capacity retention rate characteristics of the battery were also deteriorated.

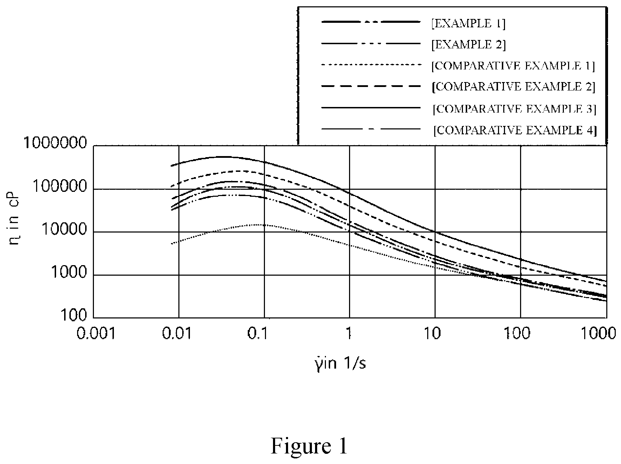

Results of evaluating rheological properties of the anode slurries measured according to Evaluation Example 3 are shown in FIG. 1.

Compared with the viscosities of the anode slurries of Examples 1 and 2, the viscosities of the anode slurries of Comparative Examples 2 to 4 were measured to be high, and the viscosity of the anode slurry of Comparative Example 1 was measured to be low.

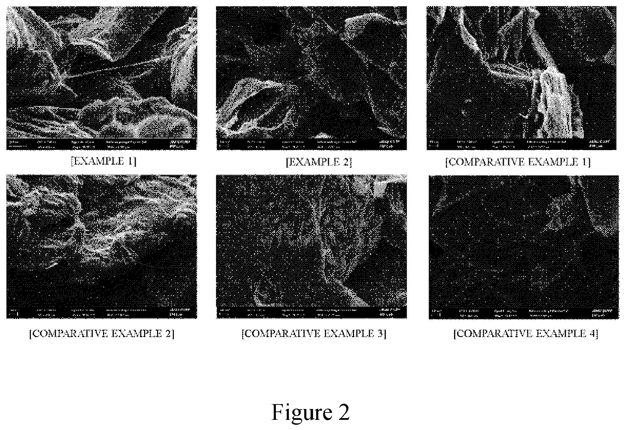

Results of evaluating dispersibility of the copolymers for anode binders measured according to Evaluation Example 5 are shown in FIG. 2.

Dispersibility of the copolymers for anode binders in the anodes of Examples 1 and 2 was good.

In comparison, in Comparative Examples 1 and 4, dispersibility of the copolymers for anode binders in the anodes was good, but anode active materials that were not sufficiently covered due to low molecular weights of the copolymers for anode binders were observed, and connection between the anode active materials was also observed to be insufficient.

Meanwhile, in Comparative Examples 2 and 3, dispersibility of the copolymers for anode binders in the anodes was insufficient, and sporadically agglomerated copolymers for anode binders were observed.

That is, the changes in the number average molecular weight and pH of the copolymer for an anode binder were confirmed to affect characteristics and performance of the anode slurry, the anode, and the secondary battery.

The scope of the present disclosure is defined by the claims described below rather than the detailed description, and all changes or modified forms derived from the meaning and scope of the claims and equivalent concepts thereof should be construed as being included in the scope of the present disclosure.

### Industrial Applicability

The copolymer of the present disclosure may reduce viscosity of an anode slurry including a silicon anode active material, carbon nanotubes, or a combination thereof, and may increase binding force, dispersibility, and electrode expansion suppression ability, thereby being capable of increasing life characteristics (a capacity retention rate) of a lithium secondary battery.

## Claims

1. A copolymer comprising, on the basis of 100 mol% of the total weight of the copolymer:
65 mol% or more and 99 mol% or less of an acrylic acid-based monomer unit, or a combination of an acrylate-based monomer unit and the acrylic acid-based monomer unit; and
1 mol% or more and 35 mol% or less of a vinyl alcohol-based monomer unit, or a combination of a vinyl acetate-based monomer unit and the vinyl alcohol-based monomer unit,
wherein the copolymer has a number average molecular weight of 150,000 or more and 230,000 or less.

2. The copolymer of claim 1, wherein the copolymer is prepared by copolymerizing an acrylate-based monomer and a vinyl acetate-based monomer and hydrolyzing the copolymerized product.

3. The copolymer of claim 2, wherein the copolymer is prepared by copolymerizing 65 mol% or more and 99 mol% or less of the acrylate-based monomer and 1 mol% or more and 35 mol% or less of the vinyl acetate-based monomer and hydrolyzing the copolymerized product.

4. The copolymer of claim 1, wherein the acrylic acid-based monomer unit is bonded to an alkali metal.

5. The copolymer of claim 4, wherein a weight ratio between the alkali metal and the copolymer (a weight of the alkali metal: a weight of the copolymer) is 0.8:100 to 6.5:100.

6. The copolymer of claim 1, wherein the copolymer comprises a monomer repeating unit represented by Chemical Formula 1 below: 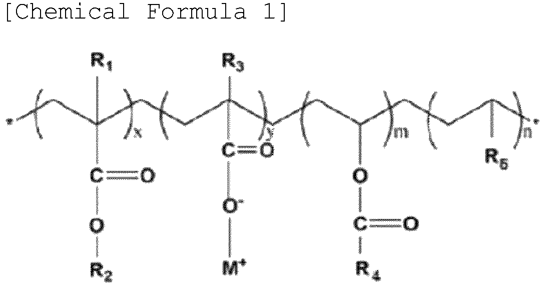
wherein, in Chemical Formula 1,
R₁ and R₃ are each independently hydrogen, a linear or branched hydrocarbon having 1 to 4 carbon atoms, or a combination thereof,
R₂ and R₄ are each independently a linear or branched hydrocarbon having 1 to 3 carbon atoms,
R₅ is -OH,
M is an alkali metal,
0.65≤x+y≤0.99, and 0.01≤m+n≤0.35, and
x+y+m+n=1, and
wherein x may be 0 or may exceed 0, and m may be 0 or may exceed 0.

7. The copolymer of claim 6, wherein R₁ and R₃ in Chemical Formula 1 are each independently hydrogen, methyl, ethyl, or a combination thereof, and
wherein R₂ and R₄ in Chemical Formula 1 are each independently methyl, ethyl, or a combination thereof.

8. The copolymer of claim 1, wherein the copolymer is a random copolymer or a block copolymer.

9. The copolymer of claim 1, wherein a pH of the copolymer is 9 or more and 11 or less.

10. The copolymer of claim 1, wherein a viscosity of the copolymer is 1,100 cP or more and 2,000 cP or less.

11. An anode slurry comprising:
the copolymer of any one of claim 1 to claim 10; and
an anode active material.

12. The anode slurry of claim 11, wherein the anode slurry has a viscosity of 2,000 cP or more and 6,000 cP or less at a shear rate of 10 s⁻¹.

13. An anode comprising:
a current collector; and
an anode active material layer formed on the current collector, the anode active material layer comprising the copolymer of any one of claim 1 to claim 10.

14. A secondary battery comprising the anode of claim 13.
